# EUROPEAN PATENT APPLICATION

(11) **EP 0 691 294 A1**
(43) Date of publication of application: **10.01.1996**
(21) Application number: 95304746.1
(22) Date of filing: 07.07.1995
(51) Int. Cl.: B65G 65/30, B65G 69/04, C12C 1/15

(54) **Material handling apparatus**

(30) Priority: 07.07.1994 GB 9413749; 13.12.1994 GB 9425097
(71) Applicant: Scottish & Newcastle plc, Edinburgh EH8 8YS Scotland (GB)
(72) Inventor: Haig, Alexander Young, Loanhead, Midlothian EH20 9BL (GB)
(74) Representative: Pacitti, Pierpaolo A.M.E.

(57) **Abstract**

An apparatus (1) for loading and /or unloading an area (20) has a distribution mechanism including a distributor (2) preferably provided by a screw conveyor and arranged to move transversely across the area. The distributor (2) may be raised or lowered on an associated framework to distribute a material over the area and/or discharge material from the area.

## Description

This invention relates to material handling apparatus for loading and/or unloading an area. It is particularly, though not exclusively, adapted for loading/unloading a kiln with malt but is also suitable for use with other materials, for example loading/unloading salt in and out of sheds.

In the field of malting it known to have a loader/leveller apparatus which is located across the width of a kiln. The apparatus travels back and forth on rails fixed on side walls of the kiln, loading and levelling green malt that is to be heated in the kiln. The known apparatus has a loader/leveller screw which is raised and lowered separately from the surrounding apparatus. This requires a complicated mechanism, often a scissor mechanism, to facilitate the raising and lowering of the screw. Furthermore, the further the scissor mechanism is extended from the fixed rails to lower the screw into the kiln, the greater the force exerted on the support mechanism due to forces on the screw acting on the support mechanism over an extended distance.

According to a first aspect of the present invention there is provided an apparatus for loading and/or unloading an area, the apparatus comprising a distribution mechanism for distributing a material over the area wherein the distribution mechanism has a distributor supported above the area by an associated framework, means for traversing the distributor across the area and means for raising and/or lowering the framework to raise and/or lower the distributor.

Preferably, the distributor is provided by a first feeder which is arranged on rails to traverse the area at a selectively variable height above the area. The rails preferably form a part of the framework such that the rails are raised and/or lowered along with the distributor. The rails may form part of the means for traversing the distributor. Preferably, the entire framework on which the distributor is supported can be raised and/or lowered

A second feeder is preferably disposed above the distribution mechanism, said second feeder being elongate and having an inlet at one end about which the second feeder pivots, and the second feeder having an outlet at its other end which tracks in an arc above the first feeder as the first feeder traverses the area.

The area may be the floor of a kiln. Alternatively the area my be the base of any other repository. The area may be a storage area; it may be rectangular.

The first and second feeders are preferably in the form of screw conveyors.

The distribution mechanism can preferably be raised and lowered by means of one or more screwjacks or hydraulic lifts which may be disposed at each corner of the framework.

Preferably, the first feeder can also be used to strip the repository.

The distribution mechanism preferably has at least two loading heights. A load sensor may be provided to sense the height of the load in the repository.

Preferably, the first feeder spans the length of the repository and travels on parallel rails transversely across the repository.

The second feeder preferably has an inlet in the centre of the roof of the repository. Preferably, the outlet of the second feeder is located above a back-end of the first feeder.

A travel sensor may be provided to limit the travel of the first feeder.

A feeder conveyor may be arranged to feed the second feeder. The feeding conveyor may be reversible to allow it to feed two repositories; it may have an electro-pneumatic slide which is openable and closable to supply the appropriate feeder.

According to a second aspect of the present invention, there is provided a method of unloading a repository comprising the steps of :
a) rotating a distributor within the repository, the distributor being provided by a screw conveyor extending along the length of the repository;
b) arranging the distributor a predetermined depth within a material held within the repository so as to transport the material towards a front of the repository;
c) transversing the distributor across the repository on rails forming part of a framework supporting the distributor in the repository; and
d) lowering the framework within the repository so as to lower the distributor within the repository to unload a lower level of the material.

An embodiment of the present invention will now be described, by way of example only, with reference to the accompanying drawings in which:
Fig. 1 is a plan of an apparatus in accordance with the present invention;

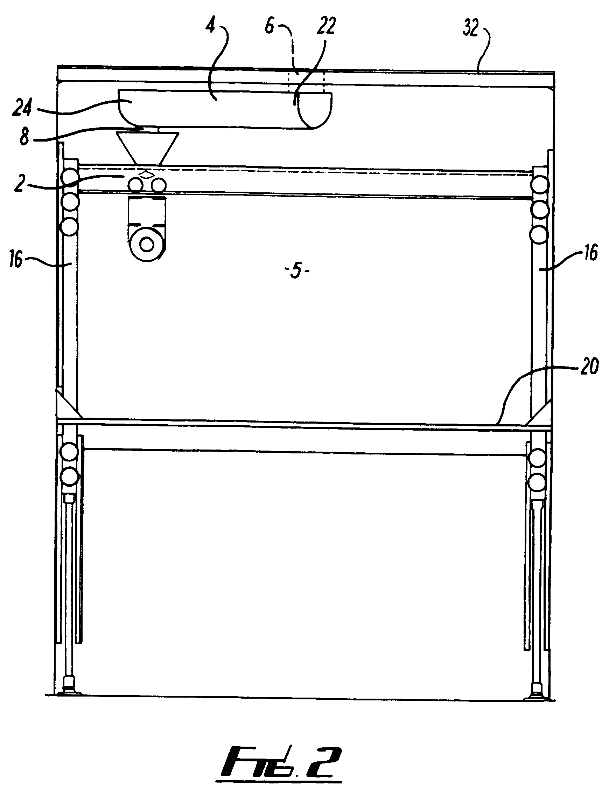

Fig. 2 is a cross-section of an apparatus in accordance with the present invention; and

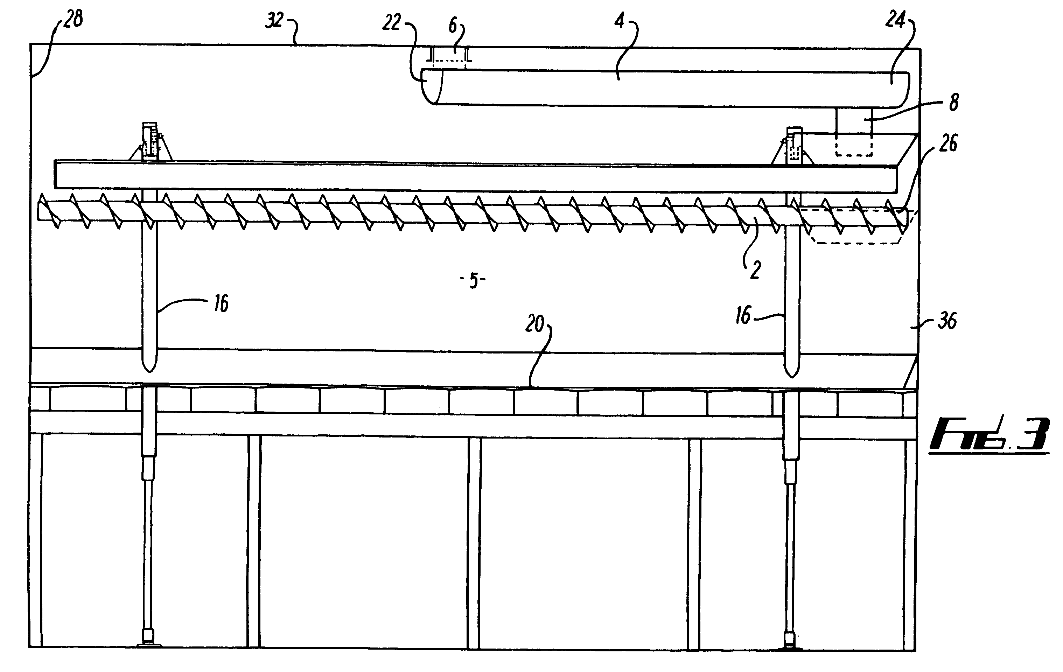

Fig. 3 is an elevation of an apparatus in accordance with the present invention.

Referring to the drawings, an apparatus 1 is arranged for loading and discharging malt from a substantially rectangular kiln 5. The apparatus has a distribution mechanism provided by a first feeder 2 in the form of a screw conveyor which provides a loading/stripping screw which spans across the length of the rectangular storage area of the kiln 5.

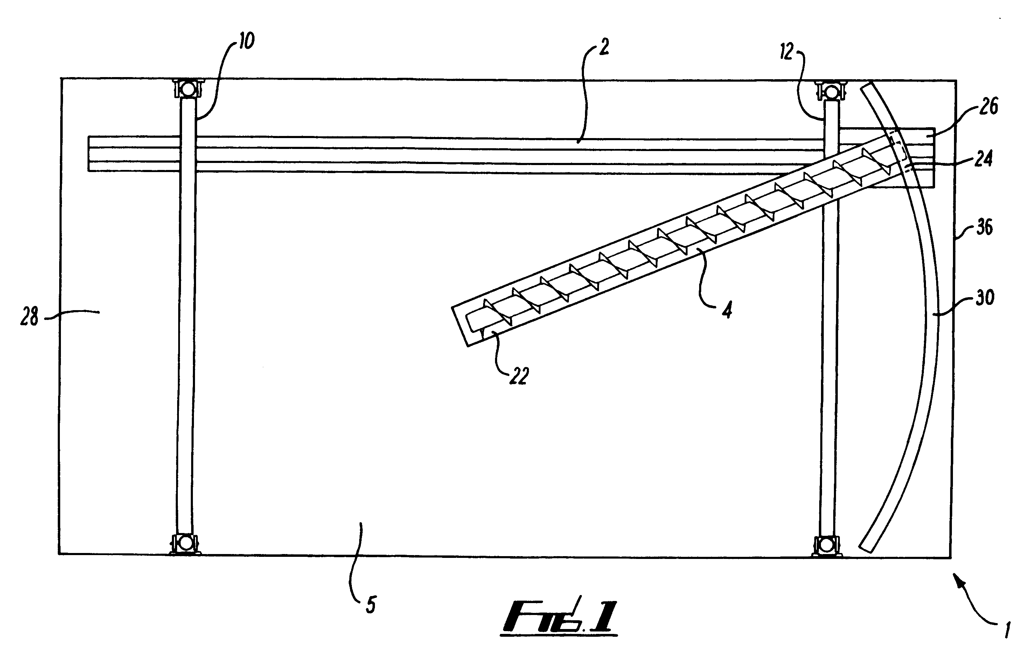

The first feeder 2 traverses the kiln 5 on rails 10,12 (a detail of which is shown in Fig. 1). The rails 10,12 on which the first feeder 2 is supported are supported at each end on a framework by a respective one of four hydraulic cylinders 16 which can be actuated to raise and lower the rails 10,12 and the first feeder 2 above the kiln floor 20. As an alternative to the hydraulic cylinders 16, screwjacks can be used to support and raise and lower the rails 10,12 and the first feeder 2. The whole unit supporting the first feeder 2 is raised and lowered within the kiln 5.

A motor is provided which drives the first feeder 2 and this motor has a soft start facility.

A second feeder 4 in the form of a 'swivel' screw conveyor is provided above the first feeder 2. The second feeder 4 is elongate and has a first end 22 which is an inlet 6 for a material to be conveyed, in this case green malt, and a second end 24 which has an output 8 for the material. The first end 22 is disposed centrally at the kiln ceiling 32 and the elongate second feeder 4 pivots about this first end 22. The second end 24 of the second feeder 4 is free to travel in an arc 30 tracking the position of the first feeder 2 as it traverses the kiln 5. The outlet 8 at the second end 24 of the second feeder 4 is located above a rear end 26 of the first feeder 2 situated towards the rear 36 of the kiln 5.

A reversible conveyor (not shown) is located at the roof of the kiln 5 and feeds the inlet 6 of the second feeder 4. The reversible conveyor is arranged such that a single roof conveyor can feed two kilns 5 alternatively.

The apparatus 1 is used to strip the kiln 5 as well as load it and, consequently, the first feeder 2 must be capable of being lowered to the kiln floor 20.

A load sensor (not shown) is provided within the kiln 5 to detect the height of the load of malt within the kiln 5. A travel sensor is also provided to detect the position of the first feeder 2 within the kiln 5, particularly to sense when the first feeder 2 has reached the opposite side of the kiln 5 to the side at which it started its traverse.

In use, the kiln 5 is loaded with green malt from the roof conveyor situated above the kiln 5. The green malt first enters the reversing conveyor which can run in alternate directions in order to feed two kilns 5. An electro-pneumatic slide is provided on each outlet of the reversing conveyor and the appropriate slide opens when the relevant kiln 5 is to be loaded.

In the kiln 5 the first feeder 2 which is the loader/stripper screw conveyor is disposed at one side of the kiln 5 against a wall of the kiln 5.

The green malt is provided to each kiln 5 in two batches and, the first feeder 2 must be capable of being set at two different loading heights above the kiln floor 20 within the kiln 5.

The loading operation begins with the second feeder 4 provided by the swivel conveyor carrying the green malt to the rear 36 of the kiln 5. The level of green malt will build up until it contacts the first feeder 2 which conveys the green malt towards the front of the kiln 28 by means of the screw action of the first feeder 2. When the green malt has reached an appropriate level, the load sensor starts up a traversing drive of the first feeder 2 to move it a distance of approximately 200 mm across the kiln 5. These operations will repeat until the travel sensor in the form of a limit switch detects the first feeder 2 at the opposite side of the kiln 5 from its starting position. At this point the loading will continue until the load sensor has been activated, at which time further loading will be stopped.

In order to permit the first and second feeders 2,4 to empty of green malt, a drain-down sequence is activated when the loading is complete. This sequence consists of the first feeder 2 being raised approximately 25 mm and the traversing mechanism returns the first feeder 2 to its initial position in the kiln 5.

The operation for the unloading of the kiln is described below. The unloading of the kiln 5 commences by starting the first feeder 2 and lowering it by means of the hydraulic cylinders or screwjacks into the malt bed to a predetermined depth of approximately 75 mm.

The screw conveyor of the first feeder 2 will be rotating such that the malt is transported to the front 28 of the kiln 5. The load sensor is now used to detect when the malt stops moving past the loading sensor, at which time the lowering mechanism lowers the first feeder 2 a further 75 mm into the malt.

The first feeder 2 traverses the kiln 5 discharging the malt until the travel sensor at the opposite side of the kiln 5 has been reached by the first feeder 2. The first feeder 2 then returns to the starting position and is lowered again. This procedure is repeated until the kiln 5 is empty.

The number of kilns can vary from plant to plant and the apparatus will be adapted accordingly to suit the individual plant requirements.

The apparatus can also be adapted for use in storage areas, particularly rectangular storage areas, other than kilns. In particular the mechanism can be modified to effect the loading an unloading of repositories for dry goods. An example of this is the stowage in and subsequent retrieval of salt from sheds.

## Claims

1. An apparatus (1) for loading and/or unloading an area (20) comprising a distribution mechanism for distributing a material over the area (20) characterised in that the distribution mechanism has a first distributor (2) supported above the area (20) by an associated framework (10; 12; 16), means (10;12) for traversing the distributor (2) across the area (20) and means (16) for raising and/or lowering the framework (10;12;16) to raise and/or lower the distributor (2).

2. An apparatus (1) in accordance with Claim 1 in which the distributor (2) is provided by a feeder in the form of a screw conveyor (2) arranged to traverse the area (20) on rails (10,12) which form part of the framework at a selectively variable height above the area (20).

3. An apparatus (1) in accordance with Claim 1 or Claim 2 in which a second, elongate feeder (4) is disposed above the distributor (2), the second feeder (4) being pivoted towards a first end (22), having an input (6) provided at that first end (22) and having an outlet 8 at a second end (24) which tracks in an arc above the distributor (2) as the distributor traverses the area (20).

4. An apparatus (1) in accordance with any preceding claim in which the means (16) for raising and/or lowering the distributor (2), comprises one or more screwjacks.

5. An apparatus (1) in accordance with any one of Claims 1 to 3 in which the means (16) for raising and/or lowering the framework comprises one or more hydraulic lifts.

6. An apparatus (1) in accordance with any preceding claim in which the means (16) for raising and/or lowering the framework depends from a base of the area (20).

7. An apparatus (1) in accordance with any preceding claim in which a load sensor is arranged to sense the height of material in the area.

8. An apparatus (1) in accordance with any preceding claim in which a travel sensor is arranged to limit the travel of the distributor (2).

9. An apparatus (1) in accordance with any preceding claim in which the material is malt and the area (20) is a kiln.

10. A method of unloading a repository comprising the steps of:
a) rotating a distributor (2) within the repository, the distributor being provided by a screw conveyor extending along the length of the repository;
b) arranging the distributor (2) a predetermined depth within a material held within the repository so as to transport the material towards a front of the repository;
c) transversing the distributor (2) across the repository on rails (10;12) forming part of a framework supporting the distributor (2) in the repository to discharge material from the repository; and
d) lowering the framework (10;12;16) within the repository so as to lower the distributor (2) within the repository to unload a lower level of the material.
